# EUROPÄISCHE PATENTANMELDUNG

(11) **EP 4 253 170 A1**
(43) Veröffentlichungstag der Anmeldung: **04.10.2023**
(21) Anmeldenummer: 22164752.2
(22) Anmeldetag: 28.03.2022
(51) Int. Cl.: B60S 9/12, B60P 3/34

(54) **VERFAHREN ZUR ASSISTENZ EINES BELADEVORGANGS EINES FAHRZEUGS, VERFAHREN ZUM ERFASSEN EINER AUF EIN STÜTZENSYSTEM EINES FAHRZEUGS WIRKENDEN LAST SOWIE FAHRZEUG ZUR DURCHFÜHRUNG DER VERFAHREN**

(71) Anmelder: STS Industries B.V., 2153 GE Nieuw-Vennep (NL)
(72) Erfinder: Blom, Pierre, 2153GE Nieuw-Vennep (NL); Helmling, Markus, 89160 Dornstadt (DE); Zuyderhoudt, Krijn Franciscus Marie, 2314AJ Leiden (NL)
(74) Vertreter: Witte, Weller und Partner Patentanwälte mbB Stuttgart

(57) **Zusammenfassung**

Vorgeschlagen wird ein Verfahren zur Assistenz eines Beladevorgangs eines Fahrzeugs (10) in Art eines Reisemobils oder eines Caravans. Das Fahrzeug (10) weist ein Stützensystem (20) mit mindestens zwei ausfahrbaren Stützen (22A-22D) sowie eine Lastsensorik (24A-24D) auf, um auf die Stützen (22A-22D) jeweils wirkende Last zu erfassen.

Im Zuge des Verfahrens werden die auf die Stützen (22A-22D) wirkende Last mittels der Lastsensorik (24A-24D) separat erfasst. Ein Auswertegerät (30) erzeugt eine Übersicht (50) über einen Beladungszustand des Fahrzeugs (10), die eine Darstellung einer Lastverteilung auf einem linken Fahrzeugbereich und einem rechten Fahrzeugbereich umfasst. Über ein Anzeigegerät (40) wird die Übersicht (50) über den Beladungszustand ausgegeben und hilft dem Nutzer dabei, beim Beladen des Fahrzeugs (10) die Gepäckstücke ideal auf das Fahrzeugzu verteilen und insbesondere ungleiche Lasten auf der linken und der rechten Fahrzeughälfte zu vermeiden.

## Beschreibung

### ANWENDUNGSGEBIET UND STAND DER TECHNIK

Die Erfindung betrifft primär den Bereich des Beladens eines Wohnmobils oder Caravans.

Fahrzeuge dieser Art werden üblicherweise für Urlaubsfahrten verwendet. Dies geht häufig damit einher, dass in erheblichem Maße Gepäck mitgeführt wird. Neben Kleidung handelt es sich meist um verschiedenes Sport- und Freizeitgerät sowie in Abhängigkeit des Urlaubszieles auch um Lebensmittel.

Wird das Fahrzeug zu sehr oder zu unausgeglichen beladen, so kann dies die Fahrstabilität des Fahrzeugs signifikant verschlechtern. Als insbesondere problematisch wird es angesehen, wenn das Fahrzeug linksseitig und rechtsseitig ungleichmäßig beladen wird, da dies zu einer in eine Richtung deutlich erhöhten Kippneigung führt.

### AUFGABE UND LÖSUNG

Aufgabe der Erfindung ist es, ein Verfahren zur Verfügung zu stellen, welches es dem Fahrzeugnutzer gestattet, die Beladung in einfacherer Weise durchzuführen und hierdurch die Fahreigenschaften des Fahrzeugs nicht zu verschlechtern.

Erfindungsgemäß wird zur Lösungdieser Aufgabe primär ein Verfahren zur Assistenz eines Beladevorgangs eines Fahrzeugs in Art eines Reisemobils oder eines Caravans vorgeschlagen. Weiterhin wird auch ein Verfahren vorgeschlagen, um die auf ein Stützensystem eines solchen Fahrzeugs wirkende Last zu ermitteln, insbesondere im Zuge der Durchführung des genannten Assistenzverfahrens.

Ein erfindungsgemäßes Fahrzeug in Art eines Reisemobils oder eines Caravans, bei dessen Beladung die erfindungsgemäßen Verfahren Anwendung finden, weist in gattungstypischer Weise einen Wohninnenraum auf. Üblicherweise sind hier eine Küche, eine Sitzanordnung mit Tisch und Bänken und/oder Schlafstätten vorgesehen. Weiterhin weist ein solches Fahrzeug typischerweise verschiedene Stauräume auf. Insbesondere handelt es sich um Stauräume im Innenraum, beispielsweise Schränke oder Stauräume unter Bänken und Schlafstätten, oder um Stauräume, die von außerhalb des Fahrzeugs zugänglich sind und die üblicherweise mittels verschließbarer Klappen verschlossen sind.

Das Fahrzeug, welches assistiert gemäß dem erfindungsgemäßen Verfahren beladen wird, weist ein Stützensystem mit mindestens zwei ausfahrbaren Stützen auf, von denen jeweils ein an einer rechten Fahrzeugseite und eine an einer linken Fahrzeugseite vorgesehen ist. Vorzugsweise weist das Fahrzeug zwei rechtsseitige und zwei linksseitige Stützen auf. Im Falle eines Caravan-Anhängers kann auch eine Konfiguration mit drei Stützen sinnvoll sein, bei denen zusätzlich zur rechtsseitigen Stütze und zur linksseitigen Stütze eine dritte Stütze an der Fahrzeugkupplung und damit in etwa zentrisch vorgesehen ist. Die mindestens zwei Stützen können eingefahren werden, wenn das Fahrzeug bewegt wird. Wird das Fahrzeug an einem Stellplatz abgestellt und als Wohnraum genutzt, so werden die Stützen ausgefahren, so dass sie zumindest einen Teil der Last des Fahrzeugs tragen.

Vorzugsweise sind die Stützen soweit ausfahrbar, dass keine oder nur noch eine Restlast von weniger als 5% auf den Rädern des Fahrzeugs ruht. Vorzugsweise ist das Stützensystem als hydraulisches Stützensystem ausgebildet. Die Stützen weisen bei einer solchen Gestaltung entsprechend jeweils einen Hydraulikzylinder auf, innerhalb dessen ein Kolben mittels Hydraulikdruck verlagerbar und die Stütze hierdurch ausfahrbar und einfahrbar ist. Vorzugsweise sind die Hydraulikkolben vertikal verfahrbar, um unmittelbar einen Stützenfuß zu verlagern. Sie können allerdings stattdessen auch Teil einer Mechanik wie einer Scherenmechanik sein und den Stützenfuß dadurch mittelbar verlagern. Insbesondere vorzugsweise können die Stützen über Hydraulikzylinder verfügen, die mehrstufig teleskopartig ausgefahren werden können.

Die Hydraulikzylinder sind vorzugsweise an eine zentrale Hydraulikeinheit des Fahrzeugs angeschlossen, die mittels mindestens einer Hydraulikpumpe sowie vorzugsweise mittels schaltbaren Flüssigkeitsventilen selektiv die Stützen einfahren und ausfahren kann. Die mindestens eine Hydraulikpumpe wird vorzugsweise mittels eines bürstenlosen Gleichstrommotors betrieben, da dieser zuverlässig mit sehr geringen Geschwindigkeiten betrieben werden kann. Dies ist im Kontext der hier beschriebenen Verfahren von Vorteil.

Das erfindungsgemäße Fahrzeug weist eine Lastsensorik auf, mittels derer die jeweils auf die Stützen wirkende Last erfassbar ist. Es kann sich beispielsweise um Kraftsensoren oder Drucksensoren handeln, die unmittelbar im Bereich der Stützen angeordnet sind. Besonders vorteilhaft ist die Lasterfassung jedoch über Drucksensoren, die den Hydraulikdruck in den Hydraulikzylindern während des Ausfahrens oder im ausgefahrenen Zustand bzw. einen hiermit im Zusammenhang stehenden Hydraulikdruck an anderem Ort des Hydrauliksystems messen. Insbesondere von Vorteil ist es, wenn eine zentrale Hydraulikeinheit mindestens einen solchen Drucksensor aufweist, vorzugsweise jeweils einen Hydrautiksensorje Stütze.

Die Lastsensorik kann auf Erfassung der auf die Stützen wirkenden Last beschränkt sein. Es sind jedoch auch Gestaltungen denkbar, bei denen zusätzlich die auf die mindestens eine Achse wirkende Last erfasst wird.

Das erfindungsgemäße Verfahren sieht vor, dass die auf die Stützen wirkenden Lasten von einem Auswertegerät des Fahrzeugs für jede Stütze einzeln erfasst werden. Je nach Art der Sensorik kann es sich um Kraftwerte oder Druckwerte handeln. Sofern die Last vollständig erfasst wird, also insbesondere durch Sensoren an den Stützen sowie an den Achsen, ist es auch möglich, anhand der erfassten Sensordaten die Masse des Fahrzeugs zu ermitteln. Dies ist im Rahmen der erfindungsgemäßen Verfahren jedoch üblicherweise nicht erforderlich.

Aus den so erfassten Daten erzeugt das Auswertegerät erfindungsgemäß eine Übersicht über den Beladungszustand, die dem Nutzer einen Überblick über die aktuelle Situation gibt und ihn insbesondere unmittelbar bei der Verteilung von Lasten im Fahrzeug unterstützt.

Insbesondere enthält die Übersicht dabei eine Information, aus der sich ersehen lässt, ob die Last insgesamt und/oder insbesondere bezogen auf Fahrzeugbereiche des Fahrzeugs zu hoch ist. Der Nutzer kann aus einer solchen Übersicht somit ersehen, wo ein weiteres einzuladendes Gepäckstück sinnvollerweise verstaut werden sollte oder auch wo im Fahrzeug zu viel Gepäck verstaut ist und wohin dieses Gepäck sinnvoller umgepackt werden könnte.

Die Übersicht umfasst Informationen zu einer Verteilung der Last auf einen linken Fahrzeugbereich und einen rechten Fahrzeugbereich. Der Nutzer kann also insbesondere erkennen, ob er das Fahrzeug auf einer Seite zu schwer beladen hat. Eine in Hinblick auf die Fahrzeugseite falsche Verteilung von Lasten kann die Fahrstabilität des Fahrzeugs deutlich verschlechtern.

Die vom Auswertegerät so erzeugte Übersicht wird dem Nutzer über ein Anzeigegerät angezeigt. Insbesondere handelt es sich um einen ausreichend großen Bildschirm, um nicht nur die Lastinformation selbst, sondern auch Handlungsempfehlungen darstellen zu können.

Eine vorteilhafte Möglichkeit besteht darin, die Übersicht auf einem Bildschirm im Innenraum des Fahrzeugs darzustellen. Da jedoch zum Betrachten dieses Bildschirms sich auch der Nutzer gerade im Fahrzeug befinden muss und somit auch eine Last auf das Stützensystem ausübt, wird es als vorteilhaft angesehen, wenn zumindest auch eine fahrzeugexterne Darstellung der Übersicht vorgesehen ist, insbesondere auf einem tragbaren Bediengerät des Fahrzeugs oder auf einem Mobiltelefon oder Tablet-Computer.

Vorzugsweise werden in der Übersicht nicht nur Lastinformationen zu einer linken und einer rechten Fahrzeugseite wiedergegeben, sondern auch zu einem Frontbereich und einem Heckbereich. Insbesondere vorzugsweise derart, dass getrennt nach den vier Fahrzeugbereichen "Front links", "Front rechts", "Heck links" und "Heck rechts" eine Lastinformation ausgegeben wird.

Die Lastinformationen, die in der Übersicht dargestellt werden, basieren auf den Lastwerten, die die Lastsensorik liefert. Im einfachsten Falle basieren die Lastinformationen der oben genannten Fahrzeugbereiche jeweils unmittelbar auf dem Lastwert einer zugeordneten Stütze oder auf den Lastwerten zweier zugeordneter Stützen. Es sind jedoch auch andere Zuordnungen und Berechnungsmethoden denkbar. So könnte es auch vorgesehen sein, dass die erfassten Lastwerte von Stützen auch genutzt werden, um die Lasten in einem anderen Fahrzeugbereich abzuschätzen.

Die Darstellung auf dem Anzeigegerät umfasst vorzugsweise eine Darstellung des Fahrzeugs in schematischer Form. Insbesondere kann es sich um eine Darstellung des Fahrzeugs von oben handeln. Eine solche schematische Darstellung des Fahrzeugs ist einer isolierten tabellarischen Darstellung gegenüber von Vorteil, da sie schnell erfasst werden kann und dadurch beim Beladen des Fahrzeugs besonders einfach im Blick behalten werden kann. Allerdings können auch anderweitige Darstellungen zusätzlich und ggf. umschaltbar angeboten werden.

Vorzugsweise umfasst die schematische Darstellung des Fahrzeugs auch Darstellungen der Staubereiche des Fahrzeugs einschließlich der Zuordnung dieser Staubereiche zu den jeweiligen Fahrzeugbereichen. Die Staubereiche sind vorzugsweise an der jeweils der Realität entsprechenden Stelle in der Darstellung des Fahrzeugs abgebildet.

Die Darstellung desjeweiligen Lastzustandes der verschiedenen Fahrzeugbereiche erfolgt vorzugsweise zumindest auch in einer schnell erfassbaren Weise über die Verwendung einer Farbskala. Hierunter wird verstanden, dass die einzelnen Fahrzeugbereiche in der Übersicht mit einer Farbkennzeichnung versehen sind bzw. als Ganzes in einer Farbe eingefärbt sind, wobei die Farbe den Lastzustand wiedergibt. Im einfachsten Falle sind nurzwei Farben vorgesehen, üblicherweise grün und rot, die als Kennzeichnungsfarben dienen, wobei von der einen zur anderen Farbe umgeschaltet wird, wenn die Last im betreffenden Fahrzeugbereich einen Grenzwert überschreitet. Vorzugsweise finden mehr als nur zwei Farben Verwendung, insbesondere vorzugsweise entsprechend einer Ampel drei Farben, insbesondere grün, orange und rot. So kann auch ein Lastzustand verdeutlicht werden, der es noch nicht erforderlich macht, den Fahrzeugbereich wieder teilweise zu entladen, der aber die Empfehlung enthält, den Fahrzeugbereich nicht weiter zu beladen. Vorteilhaft ist es weiterhin, wenn der Übergang zwischen den Farben über Zwischenfarben erfolgt, so dass beispielsweise der sukzessive Übergang vom grünen Bereich in den orangenen Bereich sowie weiterhin in den roten Bereich vom Nutzer verfolgt werden kann.

Auch wenn die beschriebenen Farbkennzeichnungen sich in der Praxis als sehr vorteilhaft herausgestellt haben, ist es von Vorteil, wenn diese flankiert werden von einer Darstellung des Beladungszustandes mit den Lastinformationen der einzelnen Fahrzeugbereiche in Form von Zahlenwerten. Auch Gestaltungen ohne Farbkennzeichnung sind möglich, bei denen die Lastinformationen nur als Zahlenwerte angezeigt wird. Als besonders vorteilhaft hat sich herausgestellt, Zahlenwerte in Form von Prozentwerten anzugeben, die den aktuellen Beladungszustand des jeweiligen Fahrzeugbereichs relativ zu einer maximalen Beladung des Fahrzeugbereichs wiedergeben. Vorzugsweise bilden hinterlegte untere Grenzwerte dabei die 0%-Marke. Statt solchen Prozentwerte oder ergänzend hierzu können auch absolute Lastwerte hier angegeben werden, beispielsweise gemessene Kräfte oder Drücke.

Die Kennzeichnung der Last der jeweiligen Fahrzeugbereiche kann derart erfolgen, dass voneinander isolierte Angaben dargestellt werden. Dies bedeutet, dass die dargestellte Last in einem Fahrzeugbereich ausschließlich davon abhängt, welche Last auf der dem Fahrzeugbereich zugeordneten Stütze ruht.

Da neben der Frage, ob die Last im betreffenden Fahrzeugbereich zu hoch ist, auch die Frage der Lastverteilung für die Fahreigenschaften des Fahrzeugs von Relevanz ist, ist es jedoch von Vorteil, wenn die Übersicht dies miteinbezieht.

So kann beispielsweise vorgesehen sein, dass die Last in einem Fahrzeugbereich nicht nur dann als kritisch dargestellt wird, beispielweise mittels roter Farbkennzeichnung, wenn der absolute Lastwert an der jeweiligen Stütze zu hoch ist, sondern auch dann, wenn der Lastwert in Relation zu einem Lastwert in einem anderen Fahrzeugbereich relativ hoch ist. Wird also beispielsweise das Fahrzeug nur auf der rechten Seite stark beladen, so könnte dies zu einer roten Farbkennzeichnung führen, die nicht nur durch Entladen der rechten Seite beseitigt werden kann, sondern auch durch Beladen der gegenüberliegenden linken Fahrzeugseite.

Neben der Lastinformation als solcher enthält die für den Nutzer dargestellte Übersicht vorzugsweise noch ergänzende Informationen, insbesondere im Bedarfsfalle mindestens einen Vorschlag in Hinblick auf die Verlagerung von Gepäck. Die Übersicht zeigt vorzugsweise an, aus welchem Fahrzeugbereich bzw. aus welchem Staubereich Gepäck entnommen werden sollte und empfiehlt in welchen Fahrzeugbereich oder Staubereich das Gepäck stattdessen verstaut werden sollte.

Die Erzeugung und Darstellung der beschriebenen Übersicht basiert auf der mittels der Lastsensorik erfassten Lastsituation des Fahrzeugs, also auf den jeweiligen Lastwerten, die mindestens in Hinblick auf die mindestens zwei Stützen, vorzugsweise in Hinblick auf die drei oder vier Stützen, erfasst wurden.

Insbesondere bei der Erfassung der Last mittels Drucksensoren, die den jeweiligen Hydraulikdruck wiedergeben, kann es jedoch zu einer Verfälschung der erfassten Werte kommen, wenn diese bei stillstehenden Stützen ermittelt werden. Es wird deshalb vorgeschlagen, dass die Messung des Hydraulikdrucks erfolgt, während die Stützen ausgefahren oder eingefahren werden, vorzugsweise mit einer Fahrgeschwindigkeit von weniger als 5 mm/sec, insbesondere mit weniger als 1 mm/sec.

Die Erfassung der auf die Stützen wirkenden Last erfolgt zumindest phasenweise kontinuierlich. Hierunter ist zu verstehen, dass über Zeiträume von mindestens einigen Sekunden oder gar einigen Minuten unterbrechungsfrei eine Messung der Last erfolgt, insbesondere an den genannten hydraulischen Drucksensoren. Diese kontinuierliche Messung ermöglicht eine unmittelbare Rückmeldung auf den Ladevorgang. Eine zu hohe Last auf einer Stütze wird nicht erst nach einem erneut auszulösenden Messvorgang erfasst, sondern unmittelbar nach dem Augenblick, zu dem die zusätzliche Last im Fahrzeug platziert wurde.

Insbesondere kann vorgesehen sein, dass die Stützen des Fahrzeugs im Wechsel für einige Sekunden oder Minuten bei geringer Geschwindigkeit angehoben und im Wechsel dazu wieder abgesenkt werden.

Bei der Durchführung der erfindungsgemäßen Verfahren kann vorgesehen sein, dass das Fahrzeuggewicht während der Erfassung der Last vollständig oder nahezu vollständig auf den Stützen aufliegt. Hierunterwird verstanden, dass maximal 5% der Last des Fahrzeugs auf dessen Rädern oder anderweitigen Stützen ohne Möglichkeit der Lasterfassung ruhen. Der Vorteil, der sich aus einem solchen Betrieb ergibt, liegt darin, dass die Summe der Lasten auf den Stützen im Wesentlichen dem Fahrzeuggewicht entspricht. Die Erfassung kann damit jenseits der Assistenz beim Ladevorgang auch der Prüfung dienen, ob das zulässige Fahrzeuggesamtgewicht überschritten ist.

Allerdings kann die Erfassung der Lasten auf den einzelnen Stützzylindern auch in einem Zustand des Stützensystems erfolgen, in dem das Fahrzeuggewicht teilweise auf Rädern des Fahrzeugs aufliegt, nämlich vorzugsweise zu mindestens 5%. Zwar ist in einem solchen Falle die Messung des Fahrzeuggesamtgewichtes nicht direkt möglich. Die relative Verteilung der Last auf die Stützen kann aber dennoch erfasst werden.

Auch möglich ist ein Verfahren, bei dem die Erfassung der Lasten sowohl in einem Zustand erfolgt, in dem das Fahrzeuggewicht vollständig oder nahezu vollständig auf den Stützen aufliegt, als auch in einem Zustand, in dem das Fahrzeuggewicht teilweise auf Rädern des Fahrzeugs aufliegt. Die Berechnung der Verteilung von Lasten im Fahrzeug auf Basis der Sensordaten kann mit höherer Genauigkeit erfolgen, wenn hierbei sowohl die Lastsituation bei aufstehenden Rädern und bei angehobenen Rädern berücksichtigt wird.

Die Erzeugung der Übersicht und das Kennzeichnen der jeweils an den Stützen aufgenommen Lasten bzw. der entsprechenden Lastdifferenzen zwischen den Stützen in dieser Übersicht erfolgt vorzugsweise durch Vergleich der jeweils erfassten Last mit einem unteren Grenzwert und/oder einem oberen Grenzwert. Diese Grenzwerte können insbesondere als Kraftwerte oder Druckwerte im Auswertegerät hinterlegt sein.

Die Grenzwerte können bezogen auf die einzelnen Stützen und/oder bezogen auf die Gesamtheit der Stützen abgelegt sein. Sie können zur Erstellung der Übersicht genutzt werden und insbesondere zurVerdeutlichung herangezogen werden, wenn eine hinterlegte Maximallast auf einer Stütze oder auf der Gesamtheit der Stützen überschritten ist. Der obere und der untere Grenzwerte eines Fahrzeugbereichs bzw. des Fahrzeugs als Ganzem definieren vorzugsweise einen Wertebereich, der den Prozentwerten von 0% bis 100% zugeordnet ist und/oder an den die oben beschriebenen Farbskala ausgerichtet ist, so dass ein gemessener Wert in Höhe des unteren Grenzwertes für das eine Ende der Farbskala, insbesondere für grün, steht, während ein gemessener Wert in Höhe des oberen Grenzwertes für das gegenüberliegende Ende der Farbskala steht, insbesondere für rot.

Das Auswertegerät des Fahrzeugs ist vorzugsweise dafür ausgebildet, einen unteren Grenzwert bzw. die unteren Grenzwerte für die einzelnen Stützen in einem Lernmodus zu erfassen, in dem die Last auf die Stützen erfasst wird und unmittelbar oder nach Veränderung auf Basis von Korrekturwerten als unterer Grenzwert abgelegt wird. Auf diese Weise ist es bequem möglich, den unteren Grenzwert bzw. die unteren Grenzwerte flexibel einzustellen. Beispielsweise kann es zweckmäßig sein, zum Zweck des Setzens des unteren Grenzwertes bzw. der unteren Grenzwerte dynamische Faktoren in einen definierten Zustand zu bringen, insbesondere einen Treibstofftank und/oder einen Wassertank vollständig zu füllen.

Alternativ oder zusätzlich kann es jedoch auch möglich sein, den unteren Grenzwert bzw. die unteren Grenzwerte für jede Stütze manuell einzugeben. Dabei kann der Benutzer vom System und insbesondere über das als Touchscreen ausgebildete Anzeigegerät gezielt nach ergänzenden Informationen gefragt werden, die für die Einstellung des unteren Grenzwertes von Relevanz sind und die in die Festlegung des unteren Grenzwertes mit einfließen. Hierzu zählt die Anzahl der beim unteren Grenzwert zu berücksichtigenden Personen, die das Fahrzeug nutzen, ein üblicher Befüllungsstand eines Wassertanks des Fahrzeugs und/oder das Vorhandensein von Fahrzeugzubehör am oder im Fahrzeug.

Der obere Grenzwert bzw. die oberen Grenzwerte können vorzugsweise vom Nutzer manuell eingegeben werden. Sie können jedoch auch fahrzeugtypabhängig bereits ab Werk im Auswertegerät hinterlegt sein. Insbesondere können die Grenzwerte unter Berücksichtigung des zulässigen maximalen Fahrzeuggesamtgewichtes festgelegt sein. Da das Stützensystem und die hier vorgesehene Sensorik vorzugsweise nicht zur Messung einer Fahrzeugmasse ausgebildet sind, kann es zweckmäßig sein, die oberen Grenzwerte beispielsweise in Form von Hydraulikdruckgrenzwerten fürjene Situation zu ermitteln und im Auswertegerät zu hinterlegen, dass das Fahrzeug derart beladen ist, dass sein zulässiges maximales Gesamtgewicht erreicht ist und die Zuladung unter fahrdynamischen Gesichtspunkten gut verteilt ist.

Wie eingangs schon genannt, betrifft die Erfindung auch ein Verfahren zum Erfassen einer auf ein Stützensystem eines Fahrzeugs in Art eines Reisemobils oder eines Caravans wirkenden Last. Wie oben beschrieben, weist das Fahrzeug ein Stützensystems auf. Weiterhin weist das Fahrzeug mindestens einen Hydraulikdrucksensor zur Erfassung des an der mindestens einen Stütze anliegenden Hydraulikdrucks bzw. eines hiermit direkt zusammenhängenden Drucks auf.

Die Erfassung der auf die Stütze wirkenden Last, also des Hydraulikdrucks an der Stütze, erfolgt erfindungsgemäß, während die betreffende Stütze hydraulisch ausgefahren oder eingefahren wird. Es hat sich gezeigt, dass auf diese Art und Weise eine Verfälschung des Ergebnisses durch den Slip-Stick-Effekt, also Haftreibung an der Stütze, vermieden werden kann.

Vorzugsweise erfolgt das Ausfahren bzw. Einfahren der Stütze während der Messung des Hydraulikdrucks sehr langsam. Die Geschwindigkeit der Bewegung der Stütze beträgt an ihrem distalen Ende vorzugsweise weniger als 5 mm/sec, insbesondere vorzugsweise weniger als 2 mm/sec, insbesondere vorzugsweise etwa 1 mm/sec. Hierdurch wird es möglich, über einen längeren Zeitraum von beispielsweise 20 Sekunden eine kontinuierliche Messung zu gestatten.

Besonders bevorzugt ist es, wenn während der Erfassung der Last der betreffende Stützzylinder im Wechsel eingefahren und ausgefahren wird, wobei die Messung des Hydraulikdruck vorzugsweise während des Ausfahrens und während des Einfahrens erfolgt, ggf. durch eine kurze Unterbrechung beim Wechsel der Fahrrichtung.

Die Erfassung der Last erfolgt vorzugsweise im Kontext des oben beschriebenen Assistenzsystems zum Beladen des Fahrzeugs. Durch das lang andauernde oder nahezu dauerhafte Erfassen der Last, unterbrochen allenfalls kurz während des Richtungswechsels, wird die Möglichkeit geschaffen, dass der Nutzer während eines Beladevorgangs dauerhaft durch die oben beschriebene Übersicht über den aktuellen Lastzustand des Fahrzeugs informiert wird und somit sehr unmittelbar Hinweise für das ideale Beladen des Fahrzeugs erhält.

Neben den beschriebenen Verfahren betrifft die Erfindung auch das Fahrzeug selbst, also ein Fahrzeug in Art eines Reisemobils oder eines Caravans mit einem Stützensystem mit mindestens zwei und vorzugsweise drei oder vier ausfahrbaren Stützen und einer Lastsensorik, um auf die Stützen wirkende Lasten zu erfassen. Weiterhin umfasst das Fahrzeug ein Auswertegerät, welches mittelbar oder unmittelbar Sensordaten der Lastsensorik erhält und verarbeitet.

Das Auswertegerät ist dabei erfindungsgemäß zur Durchführung von mindestens einem der oben beschriebenen Verfahren ausgebildet. Insbesondere weist das Fahrzeug vorzugsweise ein hydraulisches Stützsystem auf, dessen Hydraulik für die Messung des Hydraulikdrucks an den Stützen ausgebildet sein kann.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 und 2 zeigen ein Fahrzeug in Art eines Reisemobils.
Fig. 3 zeigt ein Bedien- und Anzeigegerät des Reisemobils.
Fig. 4 zeigt einen Grundriss des Reisemobils.
Fig. 5 zeigt in schematischer Ansicht ein Hydrauliksystem des Reisemobils.
Fig. 6A und 6B zeigen das Reisemobil und die hierzu dem Nutzer auf dem Bedien- und Anzeigegerät angezeigte Übersicht zu Beginn eines Ladevorgangs.
Fig. 7 und 8 zeigen die auf dem Bedien- und Anzeigegerät dargestellte Übersicht im Zuge der Beladung des Reisemobils.

### DETAILLIERTE BESCHREIBUNG DER AUSFÜHRUNGSBEISPIELE

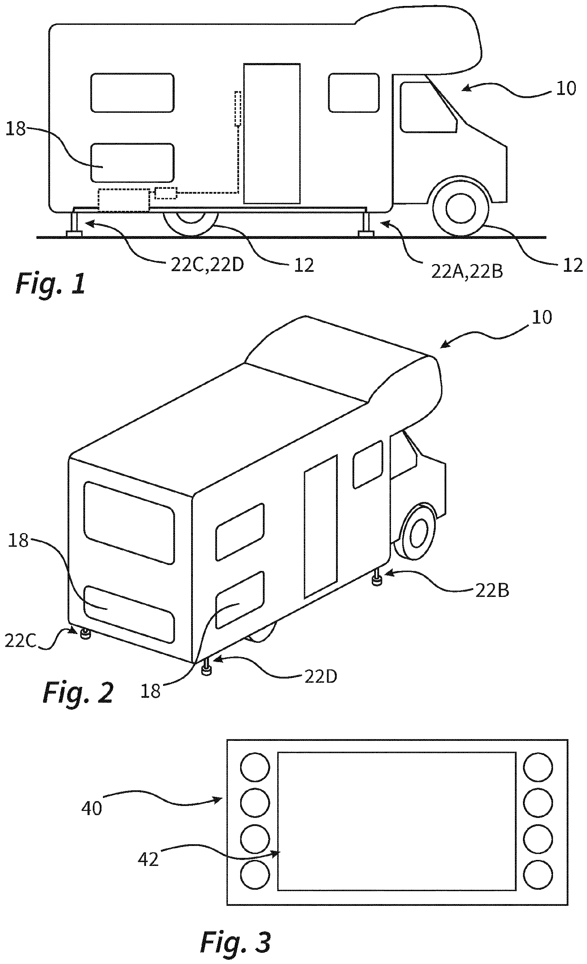

Fig. 1 und 2 zeigen ein erfindungsgemäßes Fahrzeug 10 in zwei Darstellungen. Bei dem Fahrzeug 10 handelt es sich um ein Reisemobil mit einem Wohninnenraum. Das Fahrzeug 10 ist als zweiachsiges Fahrzeug mit Rädern 12 ausgebildet. Alternativ könnte das Fahrzeug auch als einachsiger oder zweiachsiger Caravan-Anhänger gestaltet sein.

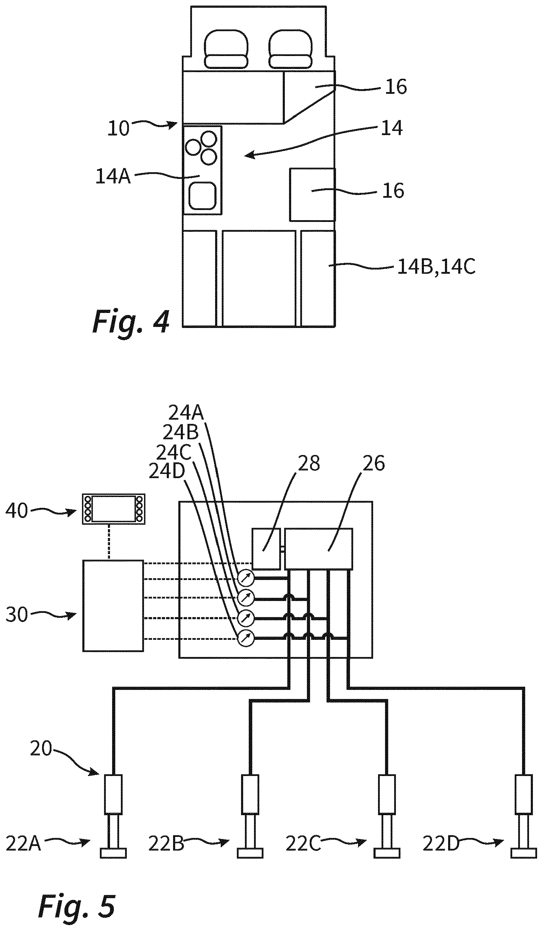

Fig. 4 zeigt den Innenraum 14 des Fahrzeugs 10, der mit einer Küche 14A, Schlafstätten 14C und Sitzanordnung 14B sowie mit Stauraum 16 in Form von Schränken oderdergleichen ausgerüstet ist.

Das Fahrzeug 10 verfügt über ein Stützensystem 20 mit insgesamt vier ausfahrbaren Stützen 22A-22D. Diese Stützen können für den Fahrbetrieb des Fahrzeugs 10 eingefahren werden und im stationären Betrieb des Fahrzeugs 10 ausgefahren werden. Die Stützen dienen primär dem Zweck, das Fahrzeug im stationären Betrieb zu stabilisieren.

Das Stützensystem 20 ist beim Fahrzeug 10 als hydraulisches Stützensystem ausgebildet. Fig 5 verdeutlicht dies. Die vier Stützen 22A-22D sind an eine Hydraulikpumpe 26 angeschlossen, die nicht näher dargestellt Hydraulikzylinder der Stützen 22A-22D mit druckbeaufschlagter Hydraulikflüssigkeit speist. In nicht näher dargestellter Weise verfügt das Hydrauliksystem über schaltbare Ventile, mit denen der Zustrom von Hydraulikflüssigkeit in die Hydraulikzylinder der unterschiedlichen Stützen 22A-22D geleitet werden kann.

Die Hydraulikpumpe 26 wird elektrisch betrieben. Hierfür ist ein bürstenloser Gleichstrommotor 28 vorgesehen, der sich dadurch auszeichnet, dass er eine hohe Laufruhe auch bei geringen Drehzahlen erreicht. Dementsprechend ist es möglich, mit gleichbleibendem geringem Hydraulikflüssigkeitsstrom die Hydraulikkolben der Stützen 22A-22D langsam auszufahren und einzufahren.

Einer jeden Zuströmleitung von der Hydraulikpumpe 26 zu den Stützen 22A-22D ist ein hydraulischer Drucksensor 24A-24D zugeordnet. Der Hydraulikdruck in den Hydraulikzylindern kann demnach kontinuierlich gemessen werden.

Das Fahrzeug verfügt über ein Steuer- und Auswertegerät 30, welches den Gleichstrommotor 28 sowie in nicht dargestellter Weise auch Schaltventile des Hydrauliksystems steuert. Das Steuer- und Auswertegerät 30 ist darüber hinaus auch für die Entgegennahme von Sensordaten der hydraulischer Drucksensoren 24A-24D vorgesehen.

Das Steuer- und Auswertegerät 30 ist mit einem kombinierten Bedien- und Anzeigegerät 40 verbunden, welches in isolierter Darstellung in Fig. 3 gezeigt ist. Dieses Bedien- und Anzeigegerät40 verfügt überein Display 42 zur Anzeige von Informationen und insbesondere der im Weiteren beschriebenen Beladungsübersicht 50. Dieses gestattet die Darstellungen von Informationen des Steuer- und Auswertegeräts 30 sowie die Interaktion mit dem System, beispielsweise zum Zwecke der Aktivierung des im Weiteren beschriebenen Belademodus.

Das Steuer- und Auswertegerät 30 ist dafür ausgebildet, das erfindungsgemäße Assistenzverfahren durchzuführen, mittelsdessen der Nutzer beim Beladen des Fahrzeugs unterstützt wird. Hierfürwird das System über das Bedien- und Anzeigegerät 40 in den Belademodus überführt, in dem eine wiederholte oder zumindest zeitweise sogar kontinuierliche Erfassung des Hydraulikdrucks an den Stützen 22A-22D stattfinden.

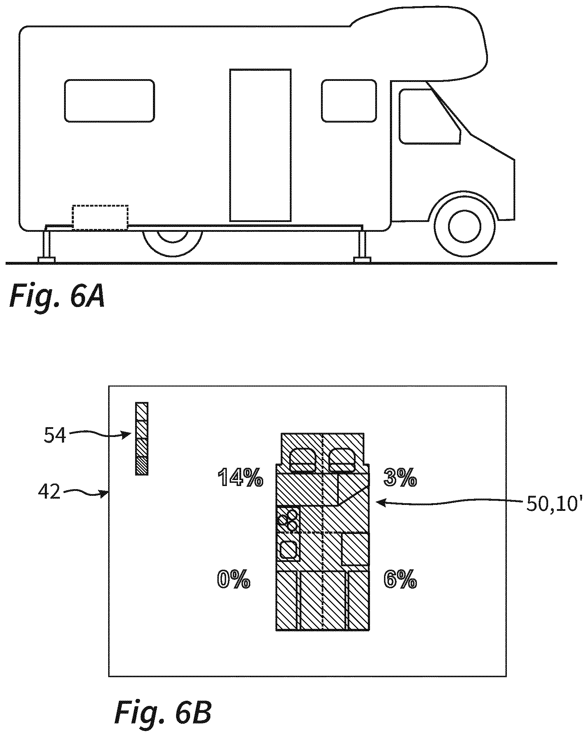

Nach Aktivieren dieses Belademodus hebt das Steuer- und Auswertegerät 30 das Fahrzeug zunächst mittels des Stützensystems 20 an. In Fig. 6A ist dieser angehobene Zustand dargestellt, wobei in diesem Beispiel die Räder 12 des Fahrzeugs vollständig entlastet werden und das Gesamtgewicht des Fahrzeugs auf den vier Stützen 22A-22D ruht.

Nach Erreichen des Zustandes, in dem die Räder 12 nicht mehr auf dem Untergrund stehen und somit keine Last mehr aufnehmen, wird das Ausfahren der Stützen 22A-22D fortgesetzt, allerdings mit einer stark reduzierten Geschwindigkeit von beispielsweise 0,5mm / Sekunde. Nach Erreichen einer ausgefahrenen Endlage werden die Stützen 22A-22D wieder abgesenkt, bis die Räder 12 fast den Untergrund erreichen. Anschließend erfolgt wiederum eine Bewegungsumkehr und die Stützen werden wieder ausgefahren. Wenn der nach dem Freiheben der Räder verbleibende Hubweg der Stützzylinder bei 40 mm liegt, dauert somit jede Phase des Anhebens und jede Phase des Absenkens jeweils ca. 80 Sekunden.

In diesem Modus erfolgt die Messung des Hydraulikdrucks an den vier Stützen 22A-22D. Im vorliegenden Beispiel werden hierbei die folgenden Drücke gemessen:

| | |
|---|---|
| Stütze 22A (links vorne, Ausgangszustand): | 44 bar |
| Stütze 22B (rechts vorne, Ausgangszustand): | 41 bar |
| Stütze 22C (links hinten, Ausgangszustand): | 35 bar |
| Stütze 22C (rechts hinten, Ausgangszustand): | 36,5 bar |

In dem Steuer- und Auswertegerät 30 sind Obergrenzen und Untergrenzen für die Drücke hinterlegt. Vorliegend beträgt die obere Grenze für die vorderen Stützen 70 bar. Die obere Grenze für die hinteren Stützen beträgt 60 bar.

Die untere Grenze für die vorderen Stützen 22A, 22B beträgt jeweils 40 bar und für die hinteren Stützten 22C, 22D jeweils 35 bar.

Die oben angegebenen Messdaten der Drucksensoren 24A-24D werden vom Steuer- und Auswertegerät 30 zur Erstellung einer graphischen Übersicht 50 genutzt, die in Fig. 6B dargestellt ist. In dieser Übersicht ist eine schematische Draufsicht 10' auf das Fahrzeug 10 enthalten, wobei diese schematische Darstellung in vier Fahrzeugbereiche untergliedert ist, die jeweils einer Stütze 22A-22D logisch zugeordnet sind. Die vier Fahrzeugbereiche sind jeweils mit einem Prozentwert versehen, der angibt, in welchem Maße die mögliche Zuladung bereits ausgeschöpft ist, die sich aus der Differenz zwischen der oberen Grenze und der unteren Grenze ergibt. Weiterhin ist jeder Fahrzeugbereich in einer Farbe aus einer Farbskala 54 eingefärbt.

Vorliegend ist im hinteren und im rechten Bereich des Fahrzeugs die mögliche Zuladung bislang nicht oder kaum genutzt, so dass diese Fahrzeugbereiche in der Übersicht 50 grün dargestellt sind (verdeutlicht in der Figur durch die Schraffur geringster Dichte). Nur im vorderen, linken Fahrzeugbereich sind etwa 14% der Zuladung erreicht, so dass dieser Fahrzeugbereich mit einem etwas helleren gelbstichigen grün dargestellt ist (verdeutlicht durch die etwas engere Schraffur).

Ausgehend von diesem Zustand packt der Nutzer nun Gepäck in die verschiedenen Stauräume des Fahrzeugs. Während er dies tut, erhöht sich der hydraulische Druck auf den Stützen 22A-22D. Im vorliegenden Beispiel stellen sich die folgenden Drücke an den Stützen 22A-22D ein:

| | |
|---|---|
| Stütze 22A (links vorne, Ausgangszustand): | 44 bar |
| Stütze 22B (rechts vorne, Ausgangszustand): | 55 bar |
| Stütze 22C (links hinten, Ausgangszustand): | 44 bar |
| Stütze 22C (rechts hinten, Ausgangszustand): | 62 bar |

Diese erfassten Werte bedeuten, dass das Fahrzeug rechts hinten eine Last aufweist, die oberhalb des oberen Grenzwertes von 60 bar liegt. Gleichzeitig ist die Last links hinten immer noch recht gering und ist noch deutlich vom genannten oberen Grenzwert entfernt.

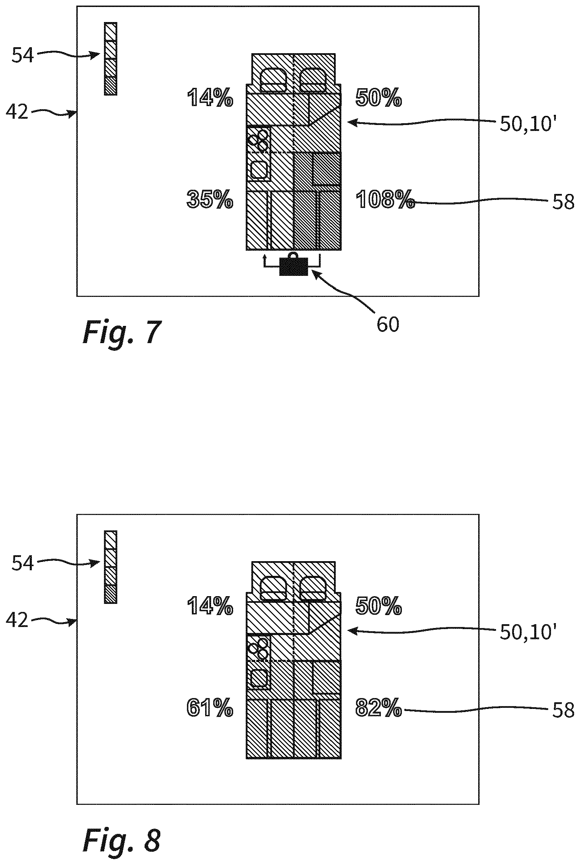

Auf Basis dieser Daten erzeugt das Steuer- und Auswertegerät 30 eine Übersicht 50, wie sie in Fig. 7 dargestellt ist. Die vier Fahrzeugbereiche des Fahrzeugs sind nun anders eingefärbt als zuvor. Der Fahrzeugbereich vorne links ist unverändert in einem hellen Grün dargestellt. Auch der Fahrzeugbereich hinten links ist in diesem Grün dargestellt. Die Farbe der rechten Fahrzeugbereiche hat sich jedoch geändert. Da der Fahrzeugbereich rechts vorne bereits 50% der Differenz zwischen oberer Grenze und unterer Grenze erreicht hat, wird er orange dargestellt.

Der Fahrzeugbereich hinten rechts hat die obere Grenze überschritten. Dieser Fahrzeugbereich wird daher in rot dargestellt. Dem Nutzer ist damit signalisiert, dass hier ein zwingend korrekturbedürftiger Zustand gegeben ist. Es kann zusätzlich vorgesehen sein, dass ein Absenken des Fahrzeugs und/oder ein Fahren des Fahrzeugs nicht möglich ist, wenn mindestens ein Fahrzeugbereich eine Last aufweist, die oberhalb der oberen Grenze liegt.

Um dem Nutzer die Korrektur besonders einfach zu machen, unterbreitet das Steuer- und Auswertegerät 30 in der Übersicht 50 einen Vorschlag 60, wie ein Umpacken stattfinden sollte. Vorliegend schlägt das System vor, dass Gepäck von rechts hinten nach links hinten umgepackt wird. Zwar ist dies nicht die einzige Möglichkeit, um in den Fahrzeugbereichen jeweils unter die obere Grenze zu gelangen. Die Alternative des Umpackens des Gepäcks von rechts hinten nach rechts vorne wäre jedoch nicht geeignet, die deutlich höhere Last auf der rechten Seite des Fahrzeugs zu reduzieren.

Nachdem Gepäck nach links hinten umgepackt wurde, stellt sich der Zustand ein, der vom Steuer- und Auswertegerät 30 in der Übersicht 50 der Fig. 8 verdeutlicht wird. Die Last ist nun besser zwischen hinten rechts und hinten links verteilt.

## Patentansprüche

1. Verfahren zur Assistenz eines Beladevorgangs eines Fahrzeugs (10) in Art eines Reisemobils oder eines Caravans mit den folgenden Merkmalen:
a. das Fahrzeug (10) weist ein Stützensystem (20) mit mindestens zwei ausfahrbaren Stützen (22A-22D), von denen mindestens eine Stütze (22B, 22D) an einer rechten Fahrzeugseite und mindestens eine Stütze (22A, 22C) an einer linken Fahrzeugseite vorgesehen ist, sowie eine Lastsensorik (24A-24D) auf, um auf die Stützen (22A-22D) jeweils wirkende Last zu erfassen, und
b. im Zuge des Verfahrens werden die auf die Stützen (22A-22D) wirkende Last mittels der Lastsensorik (24A-24D) separat erfasst, und
c. über ein Auswertegerät (30) wird eine Übersicht (50) über einen Beladungszustand des Fahrzeugs (10) erzeugt, die eine Darstellung einer Lastverteilung auf einen linken Fahrzeugbereich und einen rechten Fahrzeugbereich umfasst, und
d. über ein Anzeigegerät (40) wird die Übersicht (50) über den Beladungszustand ausgegeben.

2. Verfahren nach Anspruch 1 mit dem folgenden weiteren Merkmal:
a. die Übersicht (50) über den Beladungszustand enthält voneinander getrennte Lastinformationen (52A-52D) zu mindestens vier Fahrzeugbereichen, nämlich
- Front links,
- Front rechts,
- Heck links, und
- Heck rechts.

3. Verfahren nach Anspruch 1 oder 2 mit dem folgenden weiteren Merkmal:
a. die Übersicht (50) über den Beladungszustand enthält Darstellungen von einer Mehrzahl von Staubereichen des Fahrzeugs einschließlich deren Zuordnungen zu den Fahrzeugbereichen.

4. Verfahren nach einem der vorstehenden Ansprüche mit dem folgenden weiteren Merkmal:
a. die Übersicht (50) über den Beladungszustand enthält Informationen zu Lastinformationen der Fahrzeugbereiche unter Nutzung einer Farbskala (54),
vorzugsweise mit mindestens einem der folgenden zusätzlichen Merkmale:
b. die Farbskala (54) geht von grün zu rot, vorzugsweise von grün über orange zu rot, und/oder
c. die Farben der Farbskala (54) gehen über Zwischenfarben ineinander über.

5. Verfahren nach einem der vorstehenden Ansprüche mit dem folgenden weiteren Merkmal:
a. die Übersicht (50) über den Beladungszustand enthält Informationen zu Lastinformationen der Fahrzeugbereiche in Form von Zahlenwerten (58), insbesondere in Form eines Prozentwerts, der die aktuelle Beladung eines Fahrzeugbereichs relativ zu einer maximalen Beladung des Fahrzeugbereichs wiedergibt.

6. Verfahren nach einem der vorstehenden Ansprüche mit dem folgenden weiteren Merkmal:
a. die Übersicht über den Beladungszustand enthält mindestens einen Vorschlag (60) in Hinblick auf die Verlagerung von Gepäck umfassend die Teilinformationen, aus welchem Fahrzeugbereich bzw. welchem Staubereich Gepäck entnommen werden sollte und in welchem Fahrzeugbereich bzw. welchem Staubereich dieses Gepäck verstaut werden sollte.

7. Verfahren nach einem der vorstehenden Ansprüche mit dem folgenden weiteren Merkmal:
a. die Erfassung der auf die Stützen (22A-22D) wirkenden Last erfolgt zu mindest phasenweise kontinuierlich,
vorzugsweise mit den folgenden weiteren Merkmalen:
b. das Stützensystem (20) ist als hydraulisches Stützensystem (20) ausgebildet, und
c. die Erfassung der auf die Stützen (22A-22D) wirkenden Last erfolgt mittels Hydraulikdrucksensoren (24A-24D).

8. Verfahren nach einem der vorstehenden Ansprüche mit einem der folgenden weiteren Merkmale:
a. die Erfassung der auf die Stützen (22A-22D) wirkenden Last erfolgt in einem Zustand des Stützensystems (20), in dem das Fahrzeuggewicht vollständig oder nahezu vollständig auf den Stützen aufliegt, oder
b. die Erfassung der auf die Stützen (22A-22D) wirkenden Last erfolgt in einem Zustand des Stützensystems (20), in dem das Fahrzeuggewicht teilweise auf Rädern (12) des Fahrzeugs aufliegt, oder
c. die Erfassung der auf die Stützen (22A-22D) wirkenden Last erfolgt nacheinander in einem Zustand, in dem das Fahrzeuggewicht vollständig oder nahezu vollständig auf den Stützen (22A-22D) aufliegt, sowie in einem hiervon abweichenden Zustand, in dem das Fahrzeuggewicht teilweise auf Rädern (12) des Fahrzeugs aufliegt.

9. Verfahren nach einem der vorstehenden Ansprüche mit dem folgenden weiteren Merkmal:
a. die Erzeugung der Übersicht (50) erfolgt durch Vergleich der erfassten Last mit einem unteren Grenzwert und/oder einem oberen Grenzwert,
vorzugsweise mit mindestens einem der folgenden zusätzlichen Merkmale:
b. der mindestens eine Grenzwert ist als Kraftwert im Auswertegerät (30) hinterlegt, und/oder
c. der mindestens eine Grenzwert ist als Druckwert im Auswertegerät (30) hinterlegt.

10. Verfahren nach Anspruch 9 mit den folgenden weiteren Merkmalen:
a. das Auswertegerät (30) ist dafür ausgebildet, den mindestens einen unteren Grenzwert mittels eines Lernmodus zu erfassen, in dem der mindestens eine untere Grenzwert in Abhängigkeit von den Sensordaten der Lastsensoren (24A-24D) gebildet wird, und/oder
b. das Auswertegerät (30) ist dafür ausgebildet, den mindestens einen unteren Grenzwert in Abhängigkeit von Eingaben eines Benutzers festzulegen,
vorzugsweise mit dem folgenden zusätzlichen Merkmal:
c. das Auswertegerät (30) ist dafür ausgebildet, Eingaben des Benutzers als Antwort in Hinblick auf mindestens einen der folgenden Parameter abzufragen und zur Festlegung des unteren Grenzwertes heranzuziehen:
- Anzahl der beim unteren Grenzwert zu berücksichtigenden Personen, die das Fahrzeug (10) nutzen,
- üblicher Befüllungsstand eines Wassertanks des Fahrzeugs (10),
- Vorhandensein von Fahrzeugzubehör zum Fahrzeug (10) und/oder
- Einbeziehung des Tankinhalts.

11. Verfahren nach Anspruch 9 oder 10 mit den folgenden weiteren Merkmalen:
a. das Auswertegerät (30) ist dafür ausgebildet, den mindestens einen oberen Grenzwert in Abhängigkeit von Eingaben eines Benutzers festzulegen, und/oder
b. das Auswertegerät (30) ist dafür ausgebildet, einen Sicherheitsabstand in Hinblick auf den oberen Grenzwert zu berücksichtigen.

12. Verfahren nach einem der vorstehenden Ansprüche mit dem folgenden weiteren Merkmal:
a. auf dem Anzeigegerät (40) ist das Fahrzeug (10) in schematischer Darstellung in einer Draufsicht (10') angezeigt.

13. Verfahren zum Erfassen einer auf ein Stützensystem (20) eines Fahrzeugs (10) in Art eines Reisemobils oder eines Caravans wirkenden Last mit den folgenden Merkmalen:
a. das Fahrzeug (10) weist ein Stützensystem (20) mit hydraulisch ausfahrbaren Stützen (22A-22D) auf, und
b. das Fahrzeug (10) weist mindestens einen Hydraulikdrucksensor (24A-24D) zur Erfassung des an der Stütze (22A-22D) anliegenden Hydraulikdrucks auf, und
c. im Zuge des Verfahrens wird die auf die mindestens eine Stütze (22A-22D) wirkenden Last erfasst, während die Stütze (22A-22D) hydraulisch ausgefahren oder eingefahren wird,
vorzugsweise mit mindestens einem der folgenden zusätzlichen Merkmalen:
d. die Stütze (22A-22D) wird während der Erfassung mit einer Fahrgeschwindigkeit von weniger als 5 mm/sec ausgefahren oder eingefahren, und/oder
e. die Stütze (22A-22D) wird während der Erfassung mittels einer Hydraulikpumpe (26) gespeist, die von einen bürstenlosen Gleichstrommotor (28) betrieben wird.

14. Fahrzeug (10) in Art eines Reisemobils oder eines Caravans mit den folgenden Merkmalen:
a. das Fahrzeug (10) weist ein Stützensystem (20) mit mindestens zwei ausfahrbaren Stützen (22A-22D) auf, vorzugsweise mit drei oder vier ausfahrbaren Stützen (22A-22D), und
b. das Fahrzeug (10) weist eine Lastsensorik (24A-24D) auf, um auf die Stützen (22A-22D) jeweils wirkende Last zu erfassen, und
c. das Fahrzeug (10) verfügt über ein Auswertegerät (30) zur Auswertung von Sensordaten der Lastsensorik (24A-24D) sowie über ein Anzeigegerät (40),
**gekennzeichnet durch** das folgende Merkmal:
d. das Auswertegerät (30) und das Anzeigegerät (40) sind zur Ausführung eines Verfahrens nach einem der Ansprüche A1 bis B1 ausgebildet.

15. Fahrzeug nach Anspruch 14 mit mindestens einem der folgenden weiteren Merkmalen:
a. das Fahrzeug (10) weist einen Innenraum (14) mit einer Küche (14A), einer Sitzanordnung (14B) und/oder einer Schlafstätte (14C) auf, und/oder
b. das Fahrzeug weist mindestens einen Stauraum (16) im Innenraum (14) und/oder mindestens einen von außen zugänglichen Stauraum (18) auf.
